# EUROPÄISCHE PATENTANMELDUNG

(11) **EP 1 080 958 A2**
(43) Veröffentlichungstag der Anmeldung: **07.03.2001**
(21) Anmeldenummer: 00117239.4
(22) Anmeldetag: 14.08.2000
(51) Int. Cl.: B60H 1/24

(54) **Vorrichtung zum Belüften des Innenraumes eines Kraftfahrzeuges**

(30) Priorität: 01.09.1999 DE 19941618
(71) Anmelder: Volkswagen Aktiengesellschaft, 38436 Wolfsburg (DE)
(72) Erfinder: Bachorski, Tomasz, 59077 Hamm (DE); Sans, Michael, 38104 Braunschweig (DE)

(57) **Zusammenfassung**

Bei einer Vorrichtung zum Belüften des Innenraumes eines Kraftfahrzeuges besteht das technische Problem darin, eine möglichst gleichförmige Belüftung des Innenraumes, insbesondere des vorderen Bereiches des Innenraumes zu verwirklichen. Dieses wird gelöst durch eine Vorrichtung zum Belüften des Innenraumes eines Kraftfahrzeuges, wobei das Kraftfahrzeug ein Armaturenbrett (2) aufweist, mit einer im Armaturenbrett (2) angeordneten Austrittsöffnung (6) für einen Luftstrom und mit einer Abdeckung (8) zum Verschließen und Freigeben der Austrittsöffnung (6), wobei im geöffneten Zustand zwischen dem Rand (10) der Austrittsöffnung (6) und dem Rand (12) der Abdeckung (8) ein Luftaustrittsspalt (14) ausgebildet ist.

## Beschreibung

Die Erfindung betrifft eine Vorrichtung zum Belüften des Innenraumes eines Kraftfahrzeuges.

Derartige Vorrichtungen sind üblicherweise im Armaturenbrett integriert, wobei verschiedene Ausgestaltungen der Austrittsöffnungen für einen Luftstrom bekannt sind. Beispielsweise ist zur Belüftung der Innenfläche der Windschutzscheibe im an der Windschutzscheibe angrenzenden Bereich des Armaturenbrettes ein im wesentlichen über die gesamte Breite der Windschutzscheibe sich erstreckender Belüftungsschlitz vorgesehen. Weiterhin sind flächige Austrittsöffnungen bekannt, die mit Hilfe eines verstellbaren Lamellengitters geöffnet oder verschlossen werden können. Gleichzeitig dient das Lamellengitter für die Festlegung der Ausströmungsrichtung des Luftstromes. Die zuletzt genannten Belüftungsvorrichtungen führen dazu, daß ein gerichteter Luftstrom in den Innenraum des Kraftfahrzeuges abgegeben wird. Dieses führt zu einer ungleichmäßigen Belüftung insbesondere des vorderen Innenraumes, in dem der Fahrer und der Beifahrer sitzen. Die zuvor beschriebene Belüftungsvorrichtung für die Windschutzscheibe führt dagegen zu einer gleichmäßigen Belüftung, jedoch trifft der ausgelassene Luftstrom zunächst auf die Windschutzscheibe und verläuft dann entlang des oberen Bereiches des Innenraumes.

Der vorliegenden Erfindung liegt daher das technische Problem zugrunde, eine Vorrichtung zum Belüften des Innenraumes eines Kraftfahrzeuges anzugeben, bei der eine möglichst gleichförmige Belüftung des Innenraumes, insbesondere des vorderen Bereiches des Innenraumes verwirklicht ist.

Das zuvor aufgezeigte technische Problem wird gelöst durch eine Vorrichtung zum Belüften des Innenraumes eines Kraftfahrzeuges, wobei das Kraftfahrzeug ein Armaturenbrett aufweist, mit einer im Armaturenbrett angeordneten Austrittsöffnung für einen Luftstrom und mit einer Abdeckung zum Verschließen und Freigeben der Austrittsöffnung, wobei im geöffneten Zustand zwischen dem Rand der Austrittsöffnung und dem Rand der Abdeckung ein Luftaustrittsspalt ausgebildet ist.

Erfindungsgemäß ist erkannt worden, daß der zwischen der Abdeckung und der Austrittsöffnung gebildete Luftaus-trittsspalt insbesondere zu einer seitlichen Ausströmung über einen größeren Flächenbereich des Armaturenbrettes führt, wobei ein breitgefächerter Luftstrom und nicht ein auf nur einen bestimmten Bereich ausgerichteter Luftstrom erzeugt wird.

Während im geöffneten Zustand der Belüftungsvorrichtung der Luftsaustrittsspalt zwischen der Austrittsöffnung und der Abdeckung durch eine Verstellung der Abdeckung gebildet wird, liegen in bevorzugter Weise im verschlossenen Zustand der Belüftungsvorrichtung der Rand der Abdeckung und der Rand der Austrittsöffnung im wesentlichen vollständig aneinander an. Dadurch wird in effektiver Weise verhindert, daß im verschlossenen Zustand ein Luftstrom austreten kann.

Dazu ist in bevorzugter Weise die Form des äußeren Randes der Austrittsöffnung an die Form des Randes der Abdeckung angepaßt, wobei die Ränder des Austrittsöffnung und der Abdeckung jeweils als Anlagefläche ausgebildet sind. Somit wird ohne zusätzliche Dichtungsmaterialien erreicht, daß im verschlossenen Zustand der Luftaustrittsspalt geschlossen ist.

Weiterhin ist bevorzugt, daß der Luftaustrittsspalt zumindest teilweise umlaufend ausgebildet ist, so daß möglichst vollständig entlang des Randes der Abdeckung ein Luftaustrittsspalt ausgebildet ist. Somit wird eine gleichmäßige und in alle Richtungen seitlich von der Abdeckung gerichtete Luftströmung erreicht, die insbesondere den vorderen Bereich des Innenraumes mit einem Luftstrom versorgt. Dabei ist für den Fahrer und den Beifahrer in vorteilhafter Weise gesichert, daß kein direkter Luftzug auf diese Personen trifft. Ein angenehmeres Klima innerhalb des Innenraumes ist somit gewährleistet. Der gleiche Effekt wird auch dann erreicht, wenn der Luftaustrittsspalt entlang des Randes der Abdeckung zumindest teilweise verschlossen ist, beispielsweise durch Halterungen oder Führungselemente.

Bei einer weiteren bevorzugten Ausgestaltung der vorliegenden Erfindung ist die Größe des Luftaustrittsspaltes zwischen der Abdeckung und der Austrittsöffnung in Abhängigkeit von der Intensitätseinstellung der Lüftung verstellbar. Somit wird nicht nur über die Intensität des zugeführten Luftstromes, die beispielsweise durch einen integrierten Ventilator eingestellt werden kann, sondern auch durch die Größe des Luftaustrittsspaltes eine Regelung der Belüftung eingestellt.

In bevorzugter Weise ist die Abdeckung im wesentlichen linear verstellbar ausgebildet und vorzugsweise ist die Bewegungsrichtung der Abdeckung im wesentlichen senkrecht zur von der Austrittsöffnung gebildeten Fläche ausgerichtet. Somit wird beim Öffnen die Abdeckung derart von der Austrittsöffnung abgehoben, daß sich der gesamte Luftaus-trittsspalt in dem Maße vergrößert in dem sich die Abdeckung linear von der Austrittsöffnung entfernt.

Bei einer anderen Ausgestaltung ist die Abdeckung um eine Achse verschwenkbar angeordnet, wobei vorzugsweise die Achse im wesentlichen horizontal ausgerichtet und am oberen Ende der Abdeckung angeordnet ist. Somit wird während des Verstellens bzw. Verschwenkens der Abdeckung diese aufgeklappt, so daß der Luftaustrittsspalt im Bereich der Achse kleiner als an dem Ende der Abdeckung ist, das der Achse gegenüberliegend angeordnet ist.

Weiterhin ist in bevorzugter Weise eine Führungsmechanik zur Führung der Verstellbewegung der Abdeckung vorgesehen, so daß ein definierter Verstellweg von der Abdeckung eingenommen wird. Somit wird ein Verkanten bzw. ein nicht vollständiges Verschließen nach einem Öffnen der Vorrichtung weitgehend vermieden.

In weiter bevorzugter Weise ist die Austrittsöffnung mit einem einen Luftstrom führenden Luftkanal verbunden, so daß der Luftstrom definiert der Austrittsöffnung zugeleitet wird. Damit wird verhindert, daß die gesamte, vom Innenraum abgewandte Seite der Abdeckung vom Luftstrom angeströmt wird. Der Luftkanal führt somit zu einer die Intensität der Belüftung bündelnden Zuführung von Luft.

In weiter bevorzugter Weise bildet der Luftkanal zumindest teilweise die oben erwähnte Führungsmechanik, so daß beide Funktionen integral durch die Wandung des Luftkanals verwirklicht sind. Dieses verringert den Konstruktionsaufwand für die Belüftungsvorrichtung.

Weiterhin bevorzugt ist, daß die Austrittsöffnung in einer im Armaturenbrett integrierten Mittelkonsole angeordnet ist, so daß der Luftstrom der Belüftung im wesentlichen auf der Höhe der Oberkörper der im vorderen Bereich des Innenraumes sitzenden Personen erzeugt wird. Dabei ist prinzipiell die Dimensionierung der Abmessungen der Austrittsöffnung sowie der Abdeckung beliebig wählbar. Jedoch ist es bevorzugt, daß die Längsausdehnung der Austrittsöffnung größer als die halbe Höhe, insbesondere größer als zwei Drittel der Höhe, vorzugsweise größer als drei Viertel der Höhe des im wesentlichen nach oben ausgerichteten Abschnittes der Mittelkonsole ist. Weiterhin ist es bevorzugt, daß die Breite der Austrittsöffnung größer als die halbe Breite, insbesondere größer als zwei Drittel der Breite, vorzugsweise als drei Viertel der Breite des im wesentlichen nach oben ausgerichteten Abschnittes der Mittelkonsole ist. Durch diese bevorzugte Dimensionierung ergibt sich, daß die Abmessung des von der Abdeckung und der Austrittsöffnung gebildeten Luftaustrittsspaltes eine Größe annimmt, die ein gleichmäßiges Belüften des Innenraumes in zuverlässiger Weise bewerkstelligt.

Weiterhin vorzugsweise weist die Abdeckung mindestens ein Bedienungselement auf, das insbesondere als Drehknopf ausgebildet ist. Sofern dieses Bedienungselement der Einstellung der Lüftung dient, kann es in bevorzugter Weise auch für Antreiben einer Verstellmechanik zum Verstellen der Abdeckung verwendet werden. Somit kann durch die Betätigung eines Bedienungselementes nicht nur die Stärke der Luftströmung, sondern gleichzeitig auch die Größe des Luftaustrittsspaltes eingestellt werden.

Die vorliegende Erfindung wird im folgenden anhand von Ausführungsbeispielen näher erläutert, wobei auf die Zeichnung bezug genommen wird. In der Zeichnung zeigen:
- Fig. 1: eine dreidimensionale schematisierende Darstellung eines Armaturenbrettes mit einer erfindungsgemäßen Vorrichtung zum Belüften des Innenraumes eines Kraftfahrzeuges,
- Fig. 2: ein erstes Ausführungsbeispiel einer erfindungsgemäßen Vorrichtung im Querschnitt und
- Fig. 3: ein drittes Ausführungsbeispiel einer erfindungsgemäßen Vorrichtung.

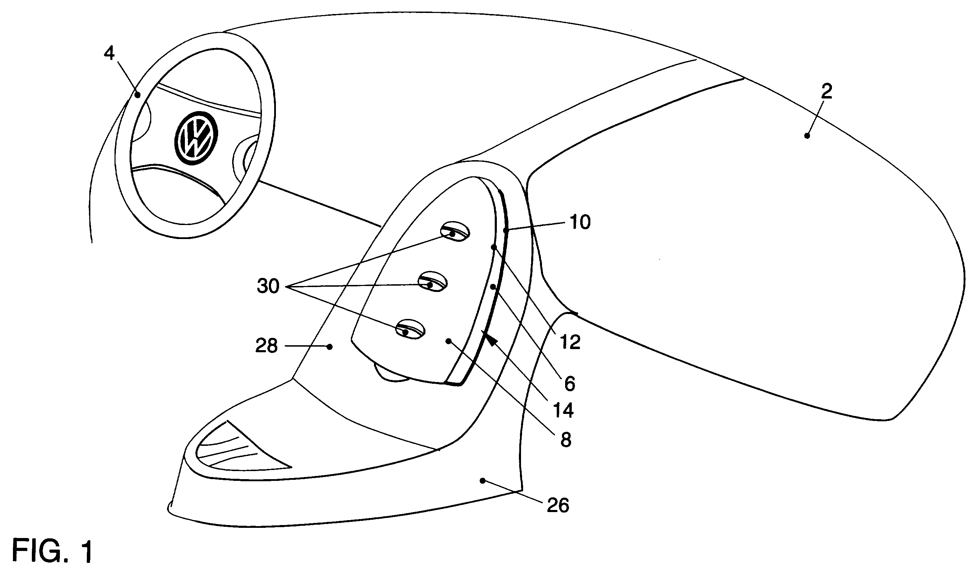

Fig. 1 zeigt in Form einer schematischen Skizze ein Armaturenbrett eines Kraftfahrzeuges, wobei der Übersicht halber die verschiedenen Anzeige und Betätigungsvorrichtungen, die dort üblicherweise angeordnet sind, weggelassen worden sind und wobei zur Orientierung nur ein Lenkrad 4 eingezeichnet ist. Im Armaturenbrett 2 ist eine Austrittsöffnung 6 dargestellt, wobei nur der rechte Rand der Austrittsöffnung 6 in Fig. 1 zu erkennen ist. Durch die Austrittsöffnung 6 kann ein Luftstrom, der entweder durch die Fahrtgeschwindigkeit des Kraftfahrzeuges oder durch einen Ventilator erzeugt worden ist, in den Innenraum des Kraftfahrzeuges eintreten. Weiterhin ist eine Abdeckung 8 zum Verschließen und Freigeben der Austrittsöffnung 6 vorgesehen. In Fig. 1 ist der geöffnete Zustand der Belüftungsvorrichtung dargestellt, in dem zwischen dem Rand 10 der Austrittsöffnung 6 und dem Rand 12 der Abdeckung 8 ein Luftaustrittsspalt 14 ausgebildet ist. In Fig. 1 ist der Luftaustrittsspalt 14 als schwarzer Streifen dargestellt.

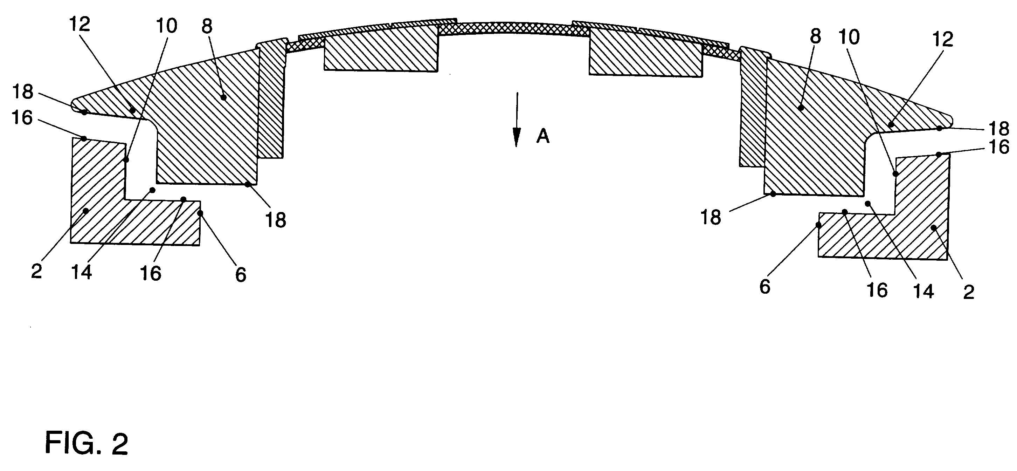

Fig. 2 zeigt im Querschnitt ein erstes Ausführungsbeispiel einer erfindungsgemäßen Vorrichtung zum Belüften des Innenraumes eines Kraftfahrzeuges. Das Armaturenbrett 2 ist zu beiden Seiten der Fig. 2 im Ausschnitt dargestellt und weist die Austrittsöffnung 6 auf. Die Abdeckung 8 weist eine Mehrzahl von Bestandteilen auf, die jedoch nicht für die Funktion der Belüftungsvorrichtung, sondern hauptsächlich der ästhetischen Ausgestaltung der Abdeckung 8 dienen. Wie Fig. 2 weiter zeigt, ist die Abdeckung 8 beabstandet zur Austrittsöffnung 6 bzw. zum Armaturenbrett 2 angeordnet. Somit ist zwischen der Austrittsöffnung 6 und der Abdeckung 8 der Luftaustrittsspalt 14 ausgebildet, wie sowohl vom linken als auch rechten Rand der Fig. 2 dargestellt ist. Aufgrund der Formgebung des Randes 10 der Austrittsöffnung 6 als auch des Randes 12 der Abdeckung 8 ergibt sich ein gekrümmter bzw. eckiger Verlauf des Luftaustrittsspaltes 14.

Da die Profile des Randes 10 und des Randes 12 komplimentär zueinander ausgebildet sind, liegt im verschlossenen Zustand der Rand 10 im wesentlichen vollständig am Rand 12 an, wie leicht aus Fig. 2 zu erkennen ist, wenn die Abdeckung 8 entlang des Pfeiles A in Richtung der Austrittsöffnung 6 verstellt wird. Somit sind der Rand 10 und der Rand 12 zumindest teilweise jeweils als Anlagefläche 16 bzw. 18 ausgebildet.

Fig. 1 zeigt weiterhin, daß der Luftaustrittsspalt 14 im wesentlichen vollständig, zumindest aber teilweise die Abdeckung 8 umlaufend ausgebildet ist. Somit wird ein breiter Luftstrom erzeugt, der den vorderen Bereich des Innenraumes der Kraftfahrzeuges gleichmäßig belüftet. Wie in den Fig. 1 und 2 dargestellt ist, ist die Abdeckung im wesentlichen linear verstellbar ausgebildet, wobei die Bewegungsrichtung der Abdeckung 8 im wesentlichen senkrecht zur von der Austrittsöffnung 6 gebildeten Fläche ausgerichtet ist. Siehe dazu insbesondere den Pfeil A in Fig. 2.

Nicht in der Zeichnung dargestellt ist eine Ausführungsform der erfindungsgemäßen Vorrichtung, bei der die Abdeckung um eine Achse verschwenkbar ausgebildet ist, wobei die Achse im wesentlichen horizontal ausgerichtet und am oberen Ende der Abdeckung angeordnet ist. Somit kann die Abdeckung auf- und zugeklappt werden.

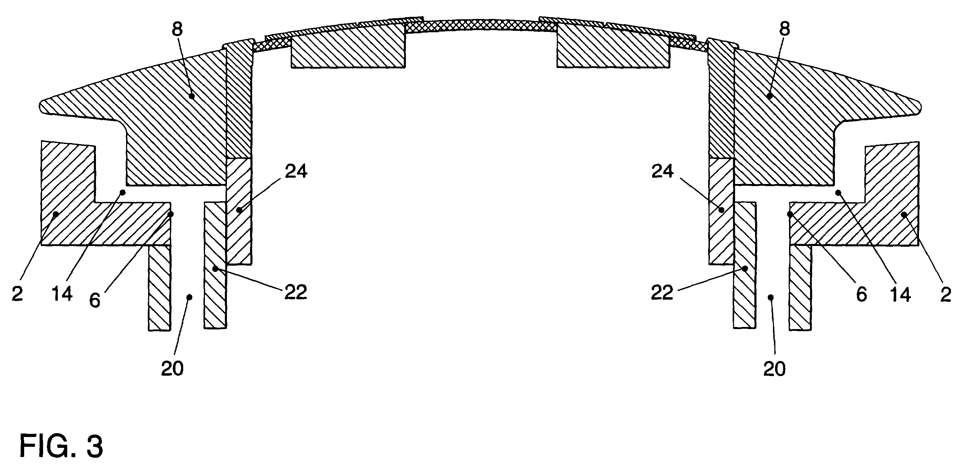

Fig. 3 zeigt ein weiteres Ausführungsbeispiel der vorliegenden Vorrichtung zur Belüftung des Innenraumes des Kraftfahrzeuges, wobei gleiche Bezugszeichen gleiche Bestandteile wie beim ersten Ausführungsbeispiel bezeichnen. Zusätzlich zu dem in Fig. 2 dargestellten Ausführungsbeispiel ist hier ein einen Luftstrom führender Luftkanal 20 vorgesehen, der in definierter Weise den Luftstrom der Austrittsöffnung 6 zuführt. Dabei kann, wie in Fig. 3 links und rechts dargestellt ist, der Luftkanal 20 eine unterschiedliche Breite aufweisen, wodurch die Intensität des aus dem Luftaustrittsspalt 14 austretenden Luftstroms entlang des Spaltes 14 unterschiedlich stark eingestellt werden kann.

Durch den Luftkanal 20 wird also gewährleistet, daß der von der Abdeckung 8 und der Austrittsöffnung 6 gebildete Luftaus-trittsspalt 14 in definierter Weise vom zugeführten Luftstrom angeströmt wird. Weiterhin dient die Wandung 22 des Luftkanals 20 dazu, mit einem mit der Abdeckung 8 verbundenen Führungselement 24 in verschiebbarem Eingriff zu stehen, so daß eine Führungsmechanik für die Bewegung der Abdeckung 8 von der Wandung 22 und dem Führungselement 24 gebildet wird. Somit sind der Luftkanal 20 und die Führungsmechanik 24 zumindest teilweise von der Wandung 22 realisiert.

In Fig. 1 ist dargestellt, daß das Armaturenbrett eine Mittelkonsole 26 aufweist und daß die Austrittsöffnung 6 in der Mittelkonsole 26 angeordnet ist. Insbesondere Ist die Austrittsöffnung 6 in dem im wesentlichen nach oben ausgerichtetem Abschnitt 28 angeordnet und weist eine Dimensionierung auf, die wie folgt beschrieben werden kann. Die Längsausdehnung der Austrittsöffnung 6 ist im vorliegenden Ausführungsbeispiel größer als die halbe Höhe des Abschnittes 28 ausgebildet, während die Breite der Austrittsöffnung 6 größer als die halbe Breite des Abschnittes 28 ist. Wahlweise kann die Längsausdehnung und oder die Breite der Austrittsöffnung darüber hinaus vergrößert sein. Jedenfalls ist die Länge des Luftaustrittsspalt 14 so groß, daß ein weitgehend gleichmäßiger Luftstrom den vorderen Bereich des Innenraumes des Kraftfahrzeuges erfüllt.

Wie Fig. 1 weiterhin zeigt, sind drei Bedienungselemente 30 in der Abdeckung 8 angeordnet, mit denen verschiedene Fahrzeugfunktionen beeinflußt und eingestellt werden können. Die Bedienungselemente 30 sind dabei als Drehknöpfe ausgebildet, wobei zumindest ein Bedienungselement 30 der Einstellung der Lüftung dient. Dabei ist es bevorzugt, daß das der Einstellung der Lüftung dienende Bedienungselement 30 eine in der Zeichnung nicht dargestellte Verstellmechanik antreibt, die das Verstellen der Abdeckung zwischen der geschlossenen und der geöffneten Position vornimmt. Somit werden sowohl die Stärke des zugeführten Luftstromes als auch die Breite des Luftaustrittsspaltes 14 über ein Bedienungselement 30 eingestellt. Ein ergonomische und übersichtliche Handhabung der Lüftungsvorrichtung ist somit die Folge.

## Patentansprüche

1. Vorrichtung zum Belüften des Innenraumes eines Kraftfahrzeuges, wobei das Kraftfahrzeug ein Armaturenbrett (2) aufweist,
- mit einer im Armaturenbrett (2) angeordneten Austrittsöffnung (6) für einen Luftstrom und
- mit einer Abdeckung (8) zum Verschließen und Freigeben der Austrittsöffnung (6),
- wobei im geöffneten Zustand zwischen dem Rand (10) der Austrittsöffnung (6) und dem Rand (12) der Abdeckung (8) ein Luftaustrittsspalt (14) ausgebildet ist.

2. Vorrichtung nach Anspruch 1,
dadurch gekennzeichnet, daß
im verschlossenen Zustand der Rand (10) der Austrittsöffnung (6) und der Rand (12) der Abdeckung (8) im wesentlichen vollständig aneinander an liegen.

3. Vorrichtung nach Anspruch 1 oder 2,
dadurch gekennzeichnet, daß
die Form des Randes (10) der Austrittsöffnung (6) im wesentlichen mit der Form des Randes (12) der Abdeckung (8) übereinstimmt.

4. Vorrichtung nach Anspruch 3,
dadurch gekennzeichnet, daß
der Rand (10) der Austrittsöffnung (6) zumindest teilweise als Anlagefläche (16) ausgebildet ist.

5. Vorrichtung nach Anspruch 3 oder 4,
dadurch gekennzeichnet, daß
der Rand (12) der Abdeckung (8) zumindest teilweise als Anlagefläche (18) ausgebildet ist.

6. Vorrichtung nach einem der Ansprüche 1 bis 5,
dadurch gekennzeichnet, daß
der Luftaustrittsspalt (14) zumindest teilweise umlaufend ausgebildet ist.

7. Vorrichtung nach einem der Ansprüche 1 bis 6,
dadurch gekennzeichnet, daß
die Größe des Luftaustrittsspaltes (14) zwischen der Abdeckung (8) und der Austrittsöffnung (6) in Abhängigkeit von der Intensitätseinstellung der Lüftung verstellbar ist.

8. Vorrichtung nach einem der Ansprüche 1 bis 7,
dadurch gekennzeichnet, daß
die Abdeckung (8) im wesentlichen linear verstellbar ist.

9. Vorrichtung nach Anspruch 8,
dadurch gekennzeichnet, daß
die Bewegungsrichtung der Abdeckung (8) im wesentlichen senkrecht zur von der Austrittsöffnung (6) gebildeten Fläche ausgerichtet ist.

10. Vorrichtung nach einem der Ansprüche 1 bis 7,
dadurch gekennzeichnet, daß
die Abdeckung (8) um eine Achse verschwenkbar angeordnet ist.

11. Vorrichtung nach Anspruch 10,
dadurch gekennzeichnet, daß
die Achse im wesentlichen horizontal ausgerichtet ist.

12. Vorrichtung nach Anspruch 10 oder 11,
dadurch gekennzeichnet, daß
die Achse am oberen Ende der Abdeckung (8) angeordnet ist.

13. Vorrichtung nach einem der Ansprüche 1 bis 12,
dadurch gekennzeichnet, daß
eine Führungsmechanik (24) zur Führung der Verstellbewegung der Abdeckung (8) vorgesehen ist.

14. Vorrichtung nach einem der Ansprüche 1 bis 13,
dadurch gekennzeichnet, daß
die Austrittsöffnung (6) mit einem einen Luftstrom führenden Luftkanal (20) verbunden ist.

15. Vorrichtung nach Anspruch 14,
dadurch gekennzeichnet, daß
der Luftkanal (20) zumindest teilweise die Führungsmechanik (24) bildet.

16. Vorrichtung nach einem der Ansprüche 1 bis 15,
dadurch gekennzeichnet, daß
das Armaturenbrett (2) eine Mittelkonsole (26) aufweist und daß die Austrittsöffnung (6) in der Mittelkonsole (26) angeordnet ist.

17. Vorrichtung nach Anspruch 16,
dadurch gekennzeichnet, daß
die Längsausdehnung der Austrittsöffnung (6) größer als die halbe Höhe, insbesondere größer als zwei Drittel der Höhe, vorzugsweise größer als drei Viertel der Höhe des im wesentlichen nach oben ausgerichteten Abschnittes (28) der Mittelkonsole (26) ist.

18. Vorrichtung nach Anspruch 16 oder 17,
dadurch gekennzeichnet, daß
die Breite der Austrittsöffnung (6) größer als die halbe Breite, insbesondere größer als zwei Drittel der Breite, vorzugsweise größer als drei Viertel der Breite des im wesentlichen nach oben ausgerichteten Abschnittes (28) der Mittelkonsole (26) ist.

19. Vorrichtung nach einem der Ansprüche 1 bis 18,
dadurch gekennzeichnet, daß
die Abdeckung (8) mindestens ein Bedienungselement (30) aufweist.

20. Vorrichtung nach Anspruch 19,
dadurch gekennzeichnet, daß
das Bedienungselement (30) als Drehknopf ausgebildet ist.

21. Vorrichtung nach Anspruch 19 oder 20,
dadurch gekennzeichnet, daß
das Bedienungselement (30) der Einstellung der Lüftung dient.

22. Vorrichtung nach einem der Ansprüche 19 bis 21,
dadurch gekennzeichnet, daß
eine Verstellmechanik zum Verstellen der Abdeckung (8) vorgesehen ist und daß das Bedienungselement (30) die Verstellmechanik betätigt.
